(19) Europäisches Patentamt / European Patent Office / Office européen des brevets

(11) **EP 2 164 216 A1**

(12) **EUROPEAN PATENT APPLICATION**

(43) Date of publication:
**17.03.2010 Bulletin 2010/11**

(51) Int Cl.:
*H04L 27/26* (2006.01)   *H04L 27/38* (2006.01)
*H04L 25/02* (2006.01)   *H04L 27/00* (2006.01)

(21) Application number: **08164141.7**

(22) Date of filing: **11.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **TELEFONAKTIEBOLAGET LM ERICSSON (publ)**
**164 83 Stockholm (SE)**

(72) Inventors:
• **Stala, Michal**
  **SE-227 31, LUND (SE)**
• **Wilhelmsson, Leif**
  **SE-240 10, DALBY (SE)**

(74) Representative: **Andersson, Björn E.**
  **Ström & Gulliksson AB**
  **P.O. Box 793**
  **220 07 Lund (SE)**

(54) **Method for determining a common phase error for an orthogonal frequency division multiplexing transmission, computer program, receiver arrangement, and communication apparatus**

(57)   A method for determining a common phase error for an orthogonal frequency division multiplexed, OFDM, transmission is disclosed. The method comprises receiving a demodulated signal $R$ of the transmission, wherein the demodulated signal R comprises a representation $R(n)$ of a symbol for respective subcarrier n; estimating a symbol $X(n)$ for respective representation $R(n)$; forming a common phase error function for the demodulated signal $R$ based on the demodulated signal $R$, the estimated symbols $X(n)$, and a function of a channel estimate $H(n)$ for respective subcarrier and at least one other transmission parameter of the transmission; and determining the common phase error from the common phase error function. A computer program for implementing the method, a receiver arrangement enabled to determine common phase error, and a communication apparatus using such receiver arrangement are also disclosed.

Fig. 1

**Description**

<u>Technical field</u>

The present invention relates to a method for determining a common phase error for an orthogonal frequency division multiplexing transmission, a computer program for implementing the method, a receiver arrangement enabled to determine common phase error, and a communication apparatus using such receiver arrangement.

<u>Background</u>

Orthogonal Frequency Division Multiplexing (OFDM) techniques are used in a variety of communication systems, e.g. wireless local area networks such as IEEE 802.11a and IEEE 802.11g, broadcasting systems such as DVB-T, DVB-H and DAB, and cellular systems such as 3GPP LTE and WiMAX. In OFDM, the data is transmitted in parallel on a plurality of subcarriers, which can be implemented in the transmitter by an inverse fast Fourier transform (IFFT), and demodulation can be implemented in the receiver by employing a fast Fourier transform(FFT). In OFDM systems, it is feasible to estimate and compensate for imperfections of the analog domain by signal processing in the digital domain. One such imperfection is phase noise introduced by local oscillators used for up-mixing and down-mixing of the base band signal to and from a used radio frequency. It is found to be beneficial to compensate for this imperfection in this way, since the demands on the local oscillators then can be more relaxed, implying implementations of the local oscillators that are less costly and less power consuming. An approach for estimating the phase error is to observe transmitted pilot signals, which are known to the receiver. However, at least for some applications, there are no pilot signals available all the time of the transmission. For example, in 3GPP LTE pilots are only available in two out of seven time slots. Therefore, such implementations may have to rely on making estimates on non-pilot symbols. In "Phase-Impairment effects and Compensation Algorithms for OFDM Systems" by K. Nikitopoulos et al, published in IEEE Transactions on Communications, Vol. 53, No. 4, pp 698-707, April 2005, such an approach is suggested. Another publication that suggests such an approach is "Common Phase Error Correction with Feedback for OFDM in Wireless Communication" by V.S. Abhayawardhana et al., published in IEEE Globecom, Vol. 1, pp 651-655, November 2002. A problem with the approach of observing non-pilot signals is that there is an uncertainty what the received signal was intended to be, which might be misinterpreted by the receiver, and thus giving poor estimates of the phase error.

<u>Summary</u>

The present invention at least alleviates the above stated problems. The present invention is based on the understanding that misinterpreted signals observed for estimating the phase error gives a bias of the phase error estimate. The inventors have realized that by a careful assignment of a model for the common phase error, the common phase error estimation can be enhanced, and especially for varying signal environments giving a more accurate estimate of the common phase error.

According to a first aspect, there is provided a method for determining a common phase error for an orthogonal frequency division multiplexed, OFDM, transmission, the method comprising receiving a demodulated signal R of the transmission, wherein the demodulated signal $R$ comprises a representation $R(n)$ of a symbol for respective subcarrier $n$; estimating a symbol $X(n)$ for respective representation $R(n)$; forming a common phase error function for the demodulated signal R based on the demodulated signal $R$, the estimated symbols $X(n)$, and a function of a channel estimate $H(n)$ for respective subcarrier and at least one other transmission parameter of the transmission; and determining the common phase error from the common phase error function.

The method may further comprise receiving a reception signal $R'$ intended for another user, wherein the reception signal $R'$ comprises a representation $R'(n)$ of a symbol for respective subcarrier $n$; estimating a modulation scheme for respective representation $R'(n)$; and determining likely symbol $X'(n)$ for respective representation $R'(n)$, wherein the forming of the common phase error function also is based on the reception signal $R'$, the likely symbols $X'(n)$, and the function of a channel estimate $H'(n)$ for respective subcarrier and the at least one other transmission parameter of the other user's transmission.

The at least one other transmission parameter may comprise at least one of power level; modulation scheme; error probability; and number of available subcarriers.

The function may comprise a weighting based on the channel estimates.

The function may further comprise a discriminating operation such that only subcarriers fulfilling a discrimination criterion are considered in the determining of the common phase error. The function may be $|H(n)|^2 D(n)$, where $H(n)$ is the channel estimate for subcarrier $n$, and $D$ is the discrimination operation, where $D(n) \in [0,1]$ for subcarrier n. The discrimination operation may be

$$D(n) = \begin{cases} 1 & \text{when } H(n) > T \\ 0 & \text{when } H(n) < T \end{cases}$$

where $T$ is a threshold. The threshold $T$ may depend on the modulation of subcarrier $n$, and/or on error probability of signal of subcarrier $n$. The discrimination operation may be

$$D(n) = \begin{cases} 1 & \text{when } n \in p \text{ subcarriers having best signal properties} \\ 0 & \text{when } n \notin p \text{ subcarriers having best signal properties.} \end{cases}$$

The subcarriers having best signal properties may be determined based on their channel estimates. The parameter $p$ may be a constant, or depend on the total number of subcarriers.

The transmission may be a multiple-input and multiple-output, MIMO, transmission, and the determining of the common phase error function may then be based on available MIMO channels.

According to a second aspect, there is provided a computer program comprising computer program code comprising instructions to cause a processor on which the computer program code is executed to perform the method according to the first aspect.

According to a third aspect, there is provided a receiver arrangement comprising a receiver arranged to receive an OFDM transmission and obtain a signal $R$ comprising a representation $R(n)$ of a symbol for respective subcarrier $n$; and a signal processor for determining a common phase error, the signal processor being arranged to determine a likely symbol $X(n)$ for respective representation $R(n)$; determine a common phase error from a common phase error function for the reception signal $R$ based on the reception signal $R$, the likely symbols $X(n)$, and a function of a channel estimate for respective subearrier $H(n)$ and at least one other transmission parameter of the transmission.

The receiver may further be arranged to receive a reception signal $R'$ intended for another user, wherein the reception signal $R'$ comprises a representation $R'(n)$ of a symbol for respective subcarrier $n$, and the signal processor is further arranged to estimate a modulation scheme for respective representation $R'(n)$; and determine a likely symbol $X'(n)$ for respective representation $R'(n)$, wherein the common phase error function also is based on the reception signal $R'$, the likely symbols $X'(n)$, and the function of a channel estimate $H'(n)$ for respective subcarrier and the at least one other transmission parameter of the other user's transmission.

The at least one other transmission parameter may comprise at least one of power level; modulation scheme; error probability; and number of available subcarriers.

The function may comprise a weighting based on the channel estimates. The function may further comprise a discriminating operation such that only subcarriers fulfilling a discrimination criterion are considered in the determining of the common phase error.

The transmission may be a multiple-input and multiple-output, MIMO, transmission, the receiver may be arranged to receive the multiple streams of the transmission, and the signal processor may then be arranged to determine the common phase error function based on available MIMO channels of the multiple streams.

According to a fourth aspect, there is provided a communication apparatus comprising a receiver arrangement according to the third aspect.

An advantage of an embodiment of the invention is enhanced estimate of the common phase error. An advantage of an embodiment of the invention is a more accurate estimate of the common phase error, especially for varying signal environments. An advantage of an embodiment of the invention is reduced computational complexity. An advantage of an embodiment of the invention is adapted determination of common phase error to used transmission parameters implying reduced bias.

Brief description of drawings

Fig. 1 is a flow chart illustrating a method according to an embodiment of the invention.
Fig. 2 is a flow chart illustrating a method according to an embodiment of the invention.
Fig. 3 illustrates a computer program comprising program code which is stored on a computer readable medium, which can be loaded and executed by a processing means, processor, or computer.
Fig. 4 is a block diagram schematically illustrating a receiver arrangement according to an embodiment of the invention.

Fig. 5 is a block diagram schematically illustrating a communication apparatus according to an embodiment of the invention.

Fig. 6 is a diagram of a signal space represented by I signal components along a horizontal axis and Q signal components along a vertical axis, illustrating both the received and demodulated signal $R$, and the corresponding signals after compensation.

Fig. 7 is a chart indicating performance of decision directed estimation as a function of threshold for what sub-carriers to use.

Fig. 8 is a chart indicating performance of decision directed estimation as a function of threshold for what sub-carriers to use for a lower SNR compared to the one of Fig. 7.

Fig. 9 is a chart indicating effective SNR as a function of threshold for what sub-carriers to use.

Detailed description

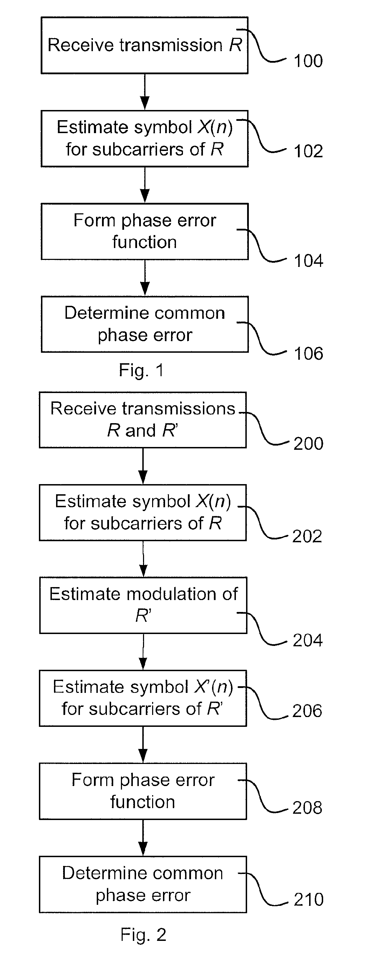

Fig. 1 is a flow chart illustrating a method according to an embodiment of the invention. In a transmission reception step 100, an OFDM transmission $R$ comprising a plurality of subcarriers is received and demodulated such that for respective subcarrier, a complex signal $R(n)$ is provided, i.e., having a position in I-Q signal space where I is a signal component in phase and Q is the corresponding signal component in quadrature, where $n$ is the subcarrier index. For respective complex signal $R(n)$, a symbol X(n) is estimated in a symbol estimation step 102. The estimation is performed by determining a closest signal point provided by the modulation, i.e. a signal point having smallest Euclidian distance to the complex signal $R(n)$. The symbol $X(n)$ associated to this signal point is thus determined to be the symbol estimate of the complex signal $R(n)$ of subcarrier $n$ of the transmission $R$. A common phase error function for the transmission $R$ is determined in a common phase error function determination step 104 based on the complex signals $R(n)$ of the transmission $R$, the corresponding estimated symbols $X(n)$ in sense of their complex positions in the signal space, and a determined weighting function. The phase deviation between respective $R(n)$ and $X(n)$ can be determined by calculation, which is known in the art. The determined common phase error function is also based on the weighting function, which depend of a channel estimate $H(n)$ for the respective subcarriers and at least one other transmission parameter of the transmission, to enhance the common phase error function, which otherwise is found to easily be biased. The other transmission parameters of the transmission can be any of power level, modulation scheme, error probability, and number of available subcarriers. From the common phase error function, the common phase error is determined, e.g. by averaging the common phase error function over the subcarriers, in a common phase error determination step 106.

The weighting function can comprise a weighting based on the channel estimates for the respective subcarriers. The weighting function can also comprise a discrimination operation for selection of subcarriers to be included in the determination of the common phase error, wherein only subcarriers fulfilling a discrimination criterion are used. The discrimination operation can be performed prior to calculation of the common phase error function, such that calculations are not performed for subcarriers not to be used, thus reducing computational complexity. For example, the weighting function can be $|H(n)|^2 D(n)$, where $H(n)$ is the channel estimate for subcarrier $n$ and $D(n)$ is the discrimination operation, where $D(n)$ is given either of values 0 or 1 for respective subcarrier $n$. The discrimination operation $D(n)$ can for example be 0 if channel estimate $H(n)$ is below a threshold $T$, and 1 if the channel estimate $H(n)$ is above the threshold $T$. The threshold $T$ in turn may depend on the modulation used in subcarrier $n$, such that respective subcarrier $n$ will have its own threshold $T(n)$. Thus, the threshold $T(n)$ may be selected higher for higher modulation schemes. Alternatively, or additionally, the threshold $T$ in turn may depend on error probability in subcarrier $n$.

There is a trade-off involved in the choice of the threshold $T$. On one hand, it is desirable to use as many subcarriers as possible to reduce the variance, which is obtained by choosing the threshold $T$ small. On the other hand, erroneous decisions imply a bias, which is remedied by choosing the threshold $T$ large. Thus, is can be seen that choosing $T$ extremely small, i.e., taking all subcarriers into account when determining the common phase error, will give us a biased estimate of the common phase error. Here, it can be noted that higher modulation schemes, such as 64-QAM, imply more bias in these cases due to the small distances between signal points of the symbols. In addition to this consideration we can see that by only using the discrimination operation of the weighting function, and no weighting in proportion to the channel estimate, the estimate may under some circumstances give a biased estimate on the common phase error if the threshold happens to be selected such that many "bad" subcarriers are included compared to the "good" ones. Therefore, the combination of weighting and discrimination operation provides a robust way of estimating the common phase error.

Alternatively, or additionally, the discrimination operation $D(n)$ can comprise only selecting a certain number of the subcarriers having the best signal properties. This will enable ensuring a certain level of variance, and may also be used to restrict the amount of calculations. Here, "best signal properties" can be selected on different parameters, but a feasible parameter to take into account is the channel estimate, but also the other transmission parameters mentioned above can be taken into account.

As stated above, this approach of selecting a certain number of subcarriers can be used as a complement to choosing a threshold for ensuring the level of variance, where the threshold approach is applied as long as the number of subcarriers taken into account do not fall below the certain number of subcarriers, but when the threshold approach gives too few subcarriers, the approach of using the certain number of best subcarriers applies. This will further safeguard that a suitable trade-off, as discussed above, is made between number of used subcarriers for the common phase error estimation and the signal properties of them.

For multiple-input and multiple-output (MIMO) operation, i.e., the use of multiple antennas at both the transmitter and the receiver to improve communication performance where there is formed several channels between the transmitter and the receiver, the several channels can be used for determining the common phase error, giving more common phase error functions to be formed, i.e. the number of channels times the number of subcarriers. Thus, the weighting function may also include a factor based on the channel, which can be used for any of the weighting and the discrimination operation, including its choice of threshold.

In multiple access systems, there are also present transmissions that are intended for other users. These may have higher signal power, and they certainly increase the number of signals to be observed. Thus, according to an approach, the common phase error is not only determined based on transmissions intended for the own receiver, but also based on transmissions intended for other users. Fig. 2 is a flow chart illustrating a method according to an embodiment of the invention according to this approach. Similar options, alternatives and functions as elucidated with reference to Fig. 1 can be applied to this approach, and is for the sake of conciseness not repeated here.

In a transmission reception step 200, OFDM transmissions $R$ and $R'$ are received and demodulated, where transmission $R$ denotes a transmission intended for the user of the receiver and transmission(s) $R'$ denotes one or more transmissions intended for other user(s). For respective subcarrier and transmission, the complex signals $R(n)$ and $R'(n)$, respectively, are provided, i.e., having a position in I-Q signal space where I is a signal component in phase and Q is the corresponding signal component in quadrature, where $n$ is the subcarrier index. For respective complex signal $R(n)$, a symbol $X(n)$ is estimated in a symbol estimation step 202. The receiver may not have information about the transmissions to the other user(s), in which case blind detection may be needed. Therefore, in a modulation estimation step 204, the modulation of the "borrowed" transmission $R'$ is estimated. Symbols $X'(n)$ can then, similar to the own transmission, be estimated in a second symbol estimation step 206. A common phase error function for the transmission $R$ is determined in a common phase error function determination step 208 based on both the complex signals $R(n)$ of the transmission $R$, and the complex signals $R'(n)$ of transmission(s) $R'$, respectively, the corresponding estimated symbols $X(n)$ and $X'(n)$, respectively, in sense of their complex positions in the signal space, and a determined function, thus increasing the number of formed common phase error functions to be observed. The determined common phase error function is based on a weighting function of a channel estimate $H(n)$ for the respective subcarriers and at least one other transmission parameter of the transmission. The other transmission parameters of the transmission can be any of power level, modulation scheme, error probability, and number of available subcarriers. From the common phase error function, the common phase error is determined, e.g. by averaging the common phase error function over the subcarriers, in a common phase error determination step 210.

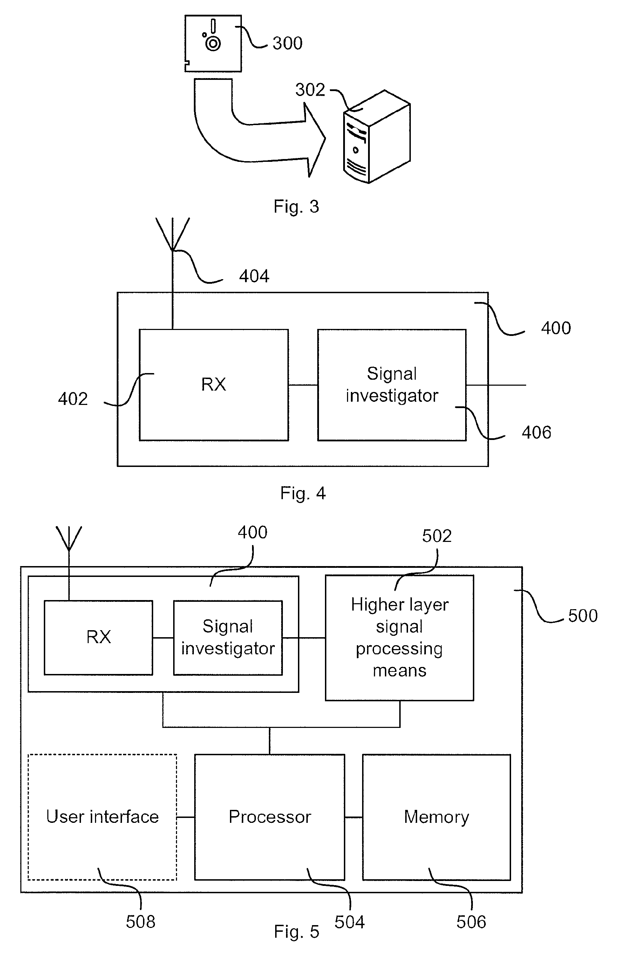

The embodiments of the methods are suitable for implementation with aid of processing means, such as computers and/or processors, as the operation of modem receivers highly rely on computerized signal processing in general, and the calculations and estimations in particular. Therefore, there is provided computer programs, comprising instructions arranged to cause the processing means, processor, or computer to perform the steps of any of the methods according to any of the embodiments described with reference to any of Figs. 1 or 2, in a receiver. The computer programs preferably comprises program code which is stored on a computer readable medium 300, as illustrated in Fig. 3, which can be loaded and executed by a processing means, processor, or computer 302 to cause it to perform the methods, respectively, according to the embodiments, preferably as any of the embodiments described with reference to any of Figs. 1 or 2. The computer 302 and computer program product 300 can be arranged to execute the program code sequentially where actions of any of the methods are performed stepwise, but mostly be arranged to execute the program code on a real-time basis where actions of any of the methods are performed upon need and availability of data. The processing means, processor, or computer 302 is preferably what normally is referred to as an embedded system. Thus, the depicted computer readable medium 300 and computer 302 in Fig. 3 should be construed to be for illustrative purposes only to provide understanding of the principle, and not to be construed as any direct illustration of the elements.

The approach can be used in a receiver arrangement 400, as schematically illustrated in Fig. 4. The receiver arrangement 400 comprises receiving circuitry 402, which down-converts and demodulates an OFDM transmission received via one or more antennas 404, and outputs the demodulated signal to a signal investigator 406 of the receiver arrangement 400. The signal investigator 406, which preferably is a signal processor, is arranged to perform the actions according to any of the embodiments described with reference to any of Figs 1 or 2, which can be implemented as described with reference to Fig. 3. The receiver arrangement 400 can also comprise a modulation estimator arranged to estimate modulation scheme of signals for which the modulation scheme is unknown, i.e. for blind detection as elucidated above. The receiver arrangement 400 can also comprise a threshold determinator arranged to determine a suitable threshold for discriminating "good" and "bad" subcarriers for selection of the subcarriers to be considered for the determination of the common phase error, as described above. The receiver arrangement 400 can further comprise a signal weighter arranged to weight the contribution from the selected subcarriers to the determination of the common phase error. Any of the modulation estimator, threshold determinator, and signal weighter can be integrated with or included in the signal investigator 406.

The receiver arrangement 400 can be used in a communication apparatus 500, as illustrated in Fig. 5. The communication apparatus 500 can be a mobile telephone, a communication card in a computer, or any other apparatus arranged to perform communications in a communication system using OFDM, such as an OFDMA system, e.g. 3GPP LTE. The communication apparatus 500 comprises the receiver arrangement 400, which provides its output to higher layer signal processing means 1102 of the communication apparatus 500. The communication apparatus 500 preferably further comprises a processor 504 arranged to control operations of the communication apparatus 500. The signal investigator 406 of the receiver arrangement 400 can be integrated with the processor 504, which then performs the actions elucidated above. The processor 504 preferably works with aid of a memory 506, which is arranged to store and provide work and/or content information. Optionally, if the communication apparatus 500 is an apparatus to be operated directly by a user, such as a mobile phone, the communication apparatus 500 can comprise a user interface 508, which can comprise input and output means such as microphone, speaker, display screen, keys, joystick, touchpad, touch sensitive screen, etc.

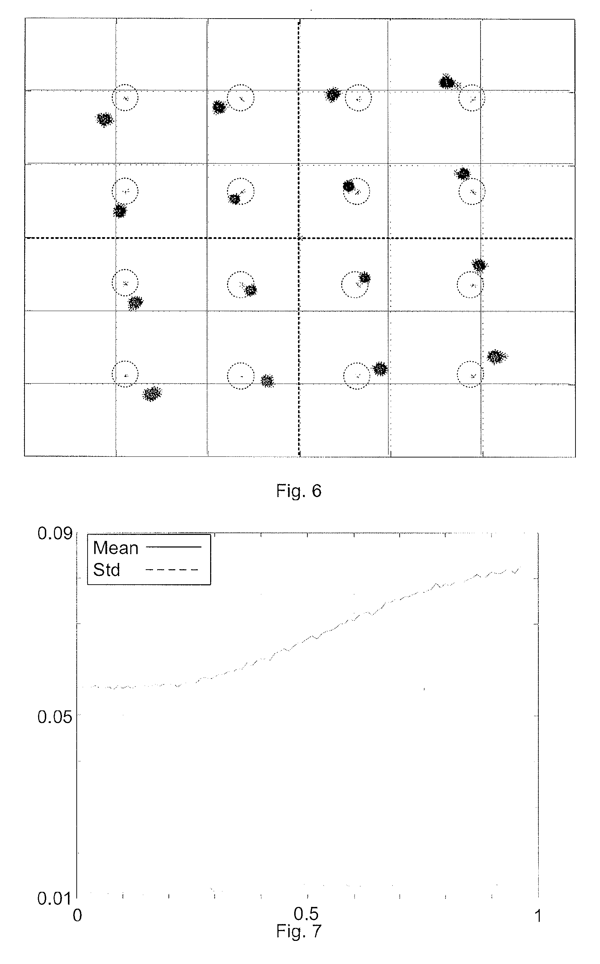

Fig. 6 is a diagram of a signal space represented by I signal components along a horizontal axis and Q signal components along a vertical axis, illustrating both the received and demodulated signal $R$, i.e. before compensation for common phase error, and the corresponding signals after compensation, here encircled by dotted circles. The received and demodulated signal $R$ can be seen as small clouds, which are the collected signal points of the plurality of subcarriers carrying a certain symbol. The common phase error can be seen in the diagram as the tilt of the pattern of clouds compared to the axes. The signal represented by the IQ-diagram of Fig. 6 is found in the receiving circuitry, cf. Fig. 4, for example after an equalizer stage which may receive its input from an FFT stage of the receiving circuitry. The IQ signal is then provided to a signal investigator, cf. Fig. 4, which may comprise the phase noise estimator, and possibly also a soft value generator and/or a forward error correcting decoder. It should be noted for the case of the "borrowed" transmission, as elucidated above, the processing of these borrowed signals ends with the phase error estimation, and no decoding is necessary. In the illustrated example of Fig. 6, the spread is moderate, and the decision mostly gives correct estimates of $X(n)$, which makes the estimate of the common phase error less biased. If however there are frequent signal points that give wrong decisions, i.e. the estimate of $X(n)$ is wrong, since the signal points have a smaller Euclidian distance to a wrong symbol point, at least a good deal of these signal points can be excluded from the determination of the common phase error with the approaches elucidated above, and thereby the estimate of the common phase error becomes less biased.

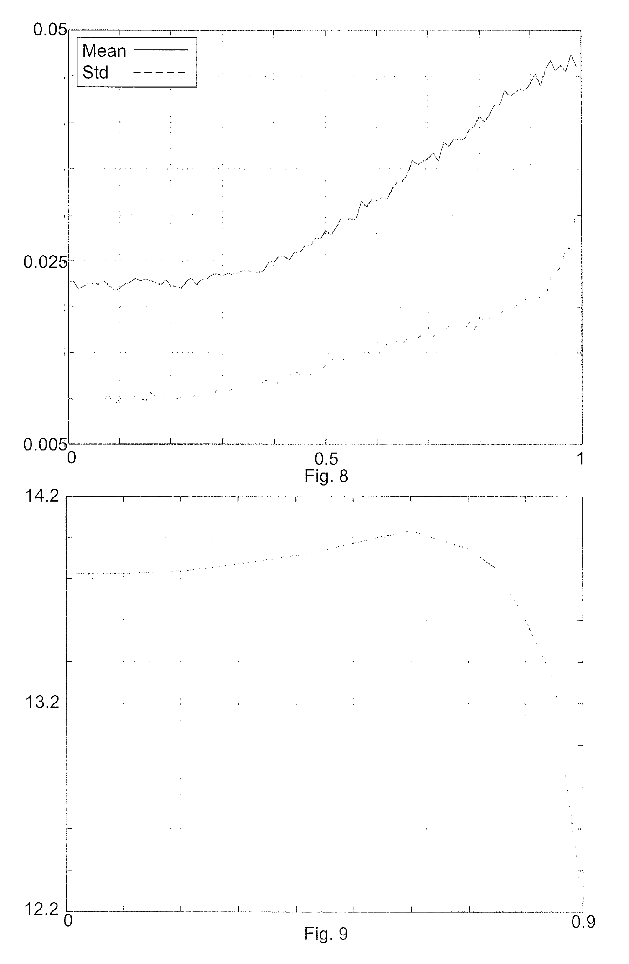

Fig. 7 is a chart indicating performance of decision directed estimation as a function of the threshold for what sub-carriers to use. In the illustrated example, 64-QAM is used and signal-to-noise-ratio (SNR) is about 20 dB, and the "correct" phase error is 0.1 rad. Fig. 8 is a similar chart as the one of Fig. 7, but where SNR is about 15 dB. Here, it can be seen that the bias becomes considerably higher, which can be explained by the number of erroneous decisions becomes significantly higher. It should be noted that the variance increases with increasing threshold value. Thus, an optimum may be found for a threshold giving a fair estimate with a fair variance.

The largest gain achieved in this embodiment of the invention is the increased ability to track larger values of common phase error. This can be seen for example in Fig. 7. Consider when the common phase error has the same sign for several consecutive symbols; The integrated common phase error will thus grow more in case no threshold is used leading to more erroneous decisions, and eventually the tracking will no longer work.

In the case of MIMO, it can be assumed that the major source for phase noise is the mobile terminal while the phase noise introduced by the base station can be more or less neglected. Further, there are a plurality of channels to be estimated, i.e. one from each transmit antenna to each receive antenna. This means that there are many more decisions to be made and consequently the complexity is increased by the corresponding factor. The different streams in case on MIMO may have very different channel quality, and different alphabet sizes. This implies that selection is made not only on what subcarriers to use, but also what streams to use and how to weight the selected subcarriers and streams may be of importance.

Fig. 9 is a chart indicating effective SNR as a function of threshold for what subcarriers to use. It can be seen in this particular case that the gain by not using all subcarriers is about 0.2 dB, which is calculated as an average of 7 OFDM symbols, i.e. a slot in 3GPP LTE. The loss is unevenly distributed, and for worst symbols, the loss can be about 0.5 dB, while for others there is no loss at all.

**Claims**

1.  A method for determining a common phase error for an orthoghonal frequency division multiplexed, OFDM, transmission, the method comprising
    receiving a demodulated signal *R* of the transmission, wherein the demodulated signal R comprises a representation *R*(*n*) of a symbol for respective subcarrier *n*;
    estimating a symbol *X*(*n*) for respective representation *R*(*n*);
    forming a common phase error function for the demodulated signal *R* based on the demodulated signal *R*, the estimated symbols *X*(*n*), and a function of a channel estimate *H*(*n*) for respective subcarrier and at least one other transmission parameter of the transmission; and
    determining the common phase error from the common phase error function.

2.  The method according to claim 1, further comprising
    receiving a reception signal *R'* intended for another user, wherein the reception signal R' comprises a representation *R'*(*n*) of a symbol for respective subcarrier *n*;
    estimating a modulation scheme for respective representation *R'*(*n*); and
    determining likely symbol *X'*(*n*) for respective representation *R'*(*n*), wherein
    the forming of the common phase error function also is based on the reception signal R', the likely symbols *X'*(*n*), and the function of a channel estimate *H'*(*n*) for respective subcarrier and the at least one other transmission parameter of the other user's transmission.

3.  The method according to claim 1 or 2, wherein the at least one other transmission parameter comprises at least one of
    power level;
    modulation scheme;
    error probability; and
    number of available subcarriers.

4.  The method according to any of claims 1 to 3, wherein the function comprises a weighting based on the channel estimates.

5.  The method according to claim 4, wherein the function further comprises a discriminating operation such that only subcarriers fulfilling a discrimination criterion are considered in the determining of the common phase error.

6.  The method according to claim 5, wherein the function is

    $$|H(n)|^2 D(n),$$

    where *H*(*n*) is the channel estimate for subcarrier *n*, and *D* is the discrimination operation, where *D*(*n*)∈ [0,1] for subcarrier *n*.

7.  The method according to claim 6, where

    $$D(n) = \begin{cases} 1 & \text{when } H(n) > T \\ 0 & \text{when } H(n) < T \end{cases}$$

    where T is a threshold.

8.  The method according to claim 7, where *T* depend on the modulation of subcarrier *n*.

9.  The method according to claim 7, where *T* depend on error probability of the signal of subcarrier *n*.

10. The method according to claim 6, where

$$D(n) = \begin{cases} 1 & \text{when } n \in p \text{ subcarriers having best signal properties} \\ 0 & \text{when } n \notin p \text{ subcarriers having best signal properties.} \end{cases}$$

11. The method according to claim 10, where subcarriers having best signal properties are determined based on their channel estimates.

12. The method according to claim 10, wherein $p$ is a constant.

13. The method according to claim 10, wherein $p$ depends on the total number of subcarriers.

14. The method according to any of claims 1 to 13, wherein the transmission is a multiple-input and multiple-output, MIMO, transmission, and the determining of the common phase error function is based on available MIMO channels.

15. A computer program comprising computer program code comprising instructions to cause a processor on which the computer program code is executed to perform the method according to any of claims 1 to 14.

16. A receiver arrangement comprising
   a receiver arranged to receive an OFDM transmission and obtain a signal $R$ comprising a representation $R(n)$ of a symbol for respective subcarrier $n$; and a
   signal processor for determining a common phase error, the signal processor being arranged to
   determine a likely symbol $X(n)$ for respective representation $R(n)$;
   determine a common phase error from a common phase error function for the reception signal R based on the reception signal $R$, the likely symbols $X(n)$, and a function of a channel estimate for respective subcarrier $H(n)$ and at least one other transmission parameter of the transmission.

17. The receiver arrangement according to claim 16, wherein the receiver is further arranged to receive a reception signal $R'$ intended for another user, wherein the reception signal $R'$ comprises a representation $R'(n)$ of a symbol for respective subcarrier $n$, and
   the signal processor is further arranged to
   estimate a modulation scheme for respective representation $R'(n)$; and
   determine a likely symbol $X'(n)$ for respective representation $R'(n)$, wherein
   the common phase error function also is based on the reception signal $R'$, the likely symbols $X'(n)$, and the function of a channel estimate $H'(n)$ for respective subcarrier and the at least one other transmission parameter of the other user's transmission.

18. The receiver arrangement according to claim 16 or 17, wherein the at least one other transmission parameter comprises at least one of
   power level;
   modulation scheme;
   error probability; and
   number of available subcarriers.

19. The receiver arrangement according to any of claims 16 to 18, wherein the function comprises a weighting based on the channel estimates.

20. The receiver arrangement according to claim 19, wherein the function further comprises a discriminating operation such that only subcarriers fulfilling a discrimination criterion are considered in the determining of the common phase error.

21. The receiver arrangement according to any of claims 16 to 20, wherein the transmission is a multiple-input and multiple-output, MIMO, transmission, the receiver is arranged to receive the multiple streams of the transmission, and the signal processor is arranged to determine the common phase error function based on available MIMO channels of the multiple streams.

22. A communication apparatus comprising a receiver arrangement according to any of claims 16 to 21.

Receive transmission $R$ — 100

Estimate symbol $X(n)$ for subcarriers of $R$ — 102

Form phase error function — 104

Determine common phase error — 106

Fig. 1

Receive transmissions $R$ and $R'$ — 200

Estimate symbol $X(n)$ for subcarriers of $R$ — 202

Estimate modulation of $R'$ — 204

Estimate symbol $X'(n)$ for subcarriers of $R'$ — 206

Form phase error function — 208

Determine common phase error — 210

Fig. 2

Fig. 3

Fig. 4

Fig. 5

Fig. 6

Fig. 7

Fig. 8

Fig. 9

Europäisches
Patentamt
European
Patent Office
Office européen
des brevets

**EUROPEAN SEARCH REPORT**

Application Number

EP 08 16 4141

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| X | US 2008/159424 A1 (HOO MIN CHUIN [US] ET AL) 3 July 2008 (2008-07-03)<br>* paragraph [0019] *<br>* paragraph [0055] *<br>* paragraph [0064] - paragraph [0069] *<br>* paragraph [0082] - paragraph [0095] *<br>* paragraph [0101] - paragraph [0106] *<br>* paragraph [0122] *<br>-----  | 1-22 | INV.<br>H04L27/26<br>H04L27/38<br><br>ADD.<br>H04L25/02<br>H04L27/00 |
| X | US 2006/182015 A1 (KIM DONG-KYU [KR]) 17 August 2006 (2006-08-17)<br>* abstract *<br>* paragraph [0003] *<br>* paragraph [0015] *<br>* paragraph [0029] *<br>* paragraph [0031] - paragraph [0032] *<br>* paragraph [0037] - paragraph [0052] *<br>-----  | 1-13, 15-22 | |
| X | US 2005/025257 A1 (GOLDSTEIN YURI [US] ET AL) 3 February 2005 (2005-02-03)<br>* abstract *<br>* paragraph [0045] - paragraph [0048] *<br>* paragraph [0066] - paragraph [0072] *<br>* paragraph [0078] - paragraph [0081] *<br>* paragraph [0086] *<br>* paragraph [0091] - paragraph [0093] *<br>* paragraph [0115] *<br>* paragraph [0143] - paragraph [0144] *<br>-----<br>-/-- | 1-13, 15-22 | TECHNICAL FIELDS SEARCHED (IPC)<br><br>H04L |

The present search report has been drawn up for all claims

| Place of search | Date of completion of the search | Examiner |
|---|---|---|
| Munich | 6 May 2009 | Palacián Lisa, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 08 16 4141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | ABHAYAWARDHANA V S ET AL: "Common phase error correction with feedback for OFDM in wireless communication" GLOBECOM'02. 2002 - IEEE GLOBAL TELECOMMUNICATIONS CONFERENCE. CONFERENCE PROCEEDINGS. TAIPEI, TAIWAN, NOV. 17 - 21, 2002; [IEEE GLOBAL TELECOMMUNICATIONS CONFERENCE], NEW YORK, NY : IEEE, US, vol. 1, 17 November 2002 (2002-11-17), pages 651-655, XP010636031 ISBN: 978-0-7803-7632-8 * abstract * * III. CPE Correction (CPEC) algorithm * Fig. 2 * | 1-13, 15-22 | |
| X | US 2005/129135 A1 (KIM KI-YUN [KR]) 16 June 2005 (2005-06-16) * abstract * * paragraph [0003] * * paragraph [0015] - paragraph [0017] * * paragraph [0030] - paragraph [0037] * * paragraph [0052] - paragraph [0074] * | 1-13, 15-22 | |

TECHNICAL FIELDS SEARCHED (IPC)

The present search report has been drawn up for all claims

| Place of search | Date of completion of the search | Examiner |
|---|---|---|
| Munich | 6 May 2009 | Palacián Lisa, Marta |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

**ANNEX TO THE EUROPEAN SEARCH REPORT
ON EUROPEAN PATENT APPLICATION NO.**

EP 08 16 4141

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2009

| Patent document cited in search report | | Publication date | Patent family member(s) | | Publication date |
|---|---|---|---|---|---|
| US 2008159424 | A1 | 03-07-2008 | NONE | | |
| US 2006182015 | A1 | 17-08-2006 | DE 102006004119 | A1 | 07-09-2006 |
| | | | JP 2006211667 | A | 10-08-2006 |
| | | | KR 20060085758 | A | 28-07-2006 |
| US 2005025257 | A1 | 03-02-2005 | US 2005026565 | A1 | 03-02-2005 |
| US 2005129135 | A1 | 16-06-2005 | KR 20050059721 | A | 21-06-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **K. Nikitopoulos et al.** Phase-Impairment effects and Compensation Algorithms for OFDM Systems. *IEEE Transactions on Communications,* April 2005, vol. 53 (4), 698-707

- **V.S. Abhayawardhana et al.** Common Phase Error Correction with Feedback for OFDM in Wireless Communication. *IEEE Globecom,* November 2002, vol. 1, 651-655